# EUROPEAN PATENT APPLICATION

(11) **EP 2 511 864 A2**
(43) Date of publication of application: **17.10.2012**
(21) Application number: 12162082.7
(22) Date of filing: 29.03.2012
(51) Int. Cl.: G06Q 10/00, G06Q 30/00, G07F 7/00

(54) **Wireless data transfer**

(30) Priority: 31.03.2011 US 201113077074
(71) Applicant: NXP B.V., 5656 AG Eindhoven (NL)
(72) Inventor: Stromberger, Gunter, 5656 AG Eindhoven (NL); Fina, Thomas, 5656 AG Eindhoven (NL)
(74) Representative: Krott, Michel

(57) **Abstract**

Various exemplary embodiments relate to a radio frequency identification chip or a near-field communication chip having a wireless interface, a buffer (112), and a wired interface. A microcontroller (108) may be connected to the wired interface. The radio frequency identification chip may receive customization data via the wireless interface, temporarily store the customization data in the buffer, and transmit the customization data to the microcontroller via the wired interface. The customization data may include data for a specific region, language, or model of consumer electronic product (100).

## Description

### FIELD OF THE INVENTION

Various exemplary embodiments disclosed herein relate generally to wireless transfer of data.

### BACKGROUND OF THE INVENTION

Many applications and products in the consumer electronic world require a country or language specific customization. This requirement is fulfilled by storing firmware or software on the consumer electronic product which includes all potential languages and customizations. The preferred language and customization for the consumer electronic product are selected by the end user. The memory within the consumer electronic product must be large enough to store all of the languages and customizations that may be required.

### SUMMARY OF THE INVENTION

A brief summary of various exemplary embodiments is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections.

Various exemplary embodiments relate to a system including: a chip having a wireless interface, a buffer, and a wired interface, wherein the chip is one of a radio frequency identification chip and a near-field communication chip; and a microcontroller connected to the wired interface; wherein the chip receives customization data via the wireless interface, temporarily stores the customization data in the buffer, and transmits the customization data to the microcontroller via the wired interface.

Various exemplary embodiments further relate to an apparatus including: a wireless interface for receiving customization data, wherein the wireless interface is one of a radio frequency identification interface and a near-field communication interface; a buffer; and a wired interface connected to a microcontroller; wherein the customization data received via the wireless interface is temporarily stored in the buffer and transmitted via the wired interface to the microcontroller.

Various exemplary embodiments further relate to a method including: receiving customization data from a device, wherein the device is one of a radio frequency identification device and a near-field communication device; temporarily storing the customization data in a buffer; and transmitting the customization data to a microcontroller; wherein the customization data is received via a wireless interface and the customization data is transmitted via a wired interface, wherein the wireless interface is one of a radio frequency identification interface and a near-field communication interface.

In some embodiments, the customization data includes a program for a consumer electronic product. In some embodiments, the program is customized for at least one of a geographic region and a model of consumer electronic product. In some embodiments, the program enables at least one language on the consumer electronic product. In some embodiments, the customization data includes a data structure for a consumer electronic product. In some embodiments, the data structure updates previously stored data in the consumer electronic product. In some embodiments, the method further includes transmitting the customization data from the radio frequency identification device by at least one of a regional sales representative, an importer, a reseller, and an end user.

### BRIEF DESCRIPTION OF THE DRAWINGS

In order to better understand various exemplary embodiments, reference is made to the accompanying drawings, wherein:
Fig. 1 illustrates a block diagram of an embodiment of a consumer electronic product and a wireless data transfer device;
Fig. 2 illustrates a flow diagram of an embodiment of a wireless data transfer device;
Fig. 3 illustrates a flow diagram of an embodiment of a data transfer chip; and
Fig. 4 illustrates a flow diagram of an embodiment of a microcontroller.

### DETAILED DESCRIPTION OF THE EMBODIMENTS

Referring now to the drawings, in which like numerals refer to like components or steps, there are disclosed broad aspects of various exemplary embodiments.

According to the foregoing, various exemplary embodiments provide for a system and method for wirelessly transferring data to a consumer electronic product.

It should be apparent from the foregoing description that various exemplary embodiments of the invention may be implemented in hardware and/or firmware. Furthermore, various exemplary embodiments may be implemented as instructions stored on a machine-readable storage medium, which may be read and executed by at least one processor to perform the operations described in detail herein. A non-transitory machine-readable storage medium may include any mechanism for storing information in a form readable by a machine, such as a personal or laptop computer, a server, or other computing device. Thus, a non-transitory machine-readable storage medium may include read-only memory (ROM), random-access memory (RAM), magnetic disk storage media, optical storage media, flash-memory devices, and similar storage media.

It should be appreciated by those skilled in the art that any block diagrams herein represent conceptual views of illustrative circuitry embodying the principals of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the spirit and scope of the invention. Accordingly, the foregoing disclosure, description, and figures are for illustrative purposes only and do not in any way limit the invention, which is defined only by the claims.

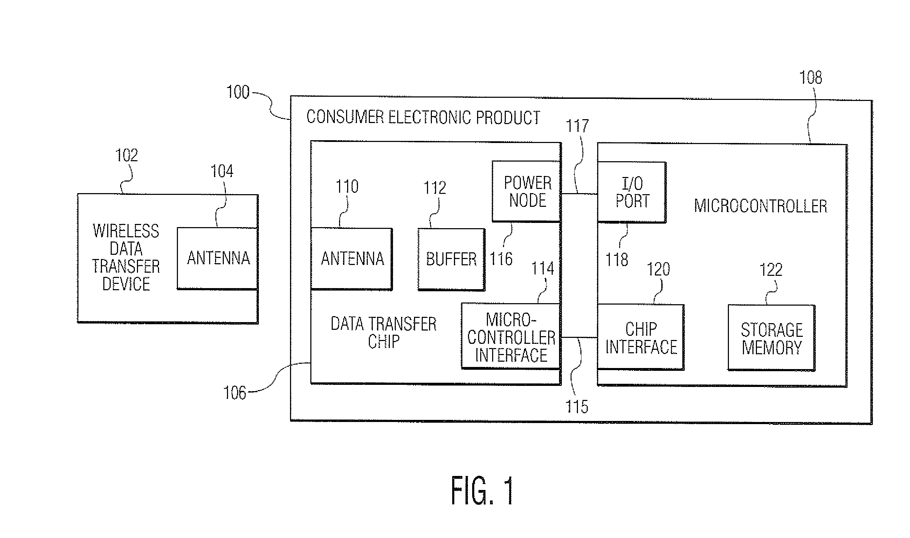

Fig. 1 illustrates a block diagram of an embodiment of a consumer electronic product 100 (CEP) and a wireless data transfer device 102. The wireless data transfer device 102 may include an antenna 104 for wirelessly communicating with the CEP 100. The wireless data transfer device 102 may be, for example, a radio frequency identification (RFID) reader, a near-field communication device, or other short-range wireless communication device. The CEP 100 may include a data transfer chip 106 and a microcontroller 108. The data transfer chip 106 may be, for example, a RFID tag, a near-field communication chip, or other short-range wireless communication chip. In accordance with the invention, the data transfer chip 106 may incorporate both RFID and near-field communication functionality on a single chip. The data transfer chip 106 may include an antenna 110, a buffer 112, a microcontroller interface 114, and a power node 116. The buffer 112 may be a first-in first-out (FIFO) memory or other non-transitory machine-readable storage medium. The antenna 110 and the buffer 112 may be integrated or external to the data transfer chip 106. The microcontroller 108 may include an input/output (I/O) port 118, a chip interface 120, and a storage memory 122. The storage memory 122 may be integrated or external to the microcontroller 108. The storage memory 122 may be, for example, EEPROM, flash ROM, hard disk, and/or other non-volatile, non-transitory, machine-readable storage medium. The microcontroller interface 114 may be connected to the chip interface 120 via at least one interface connector 115. Interface connector 115 may be a wire, a bus, and/or other signal transmission medium. The power node 116 may be connected to the I/O port 118 via at least one power connector 117. Power connector 117 may be a wire, a bus, and/or other signal transmission medium.

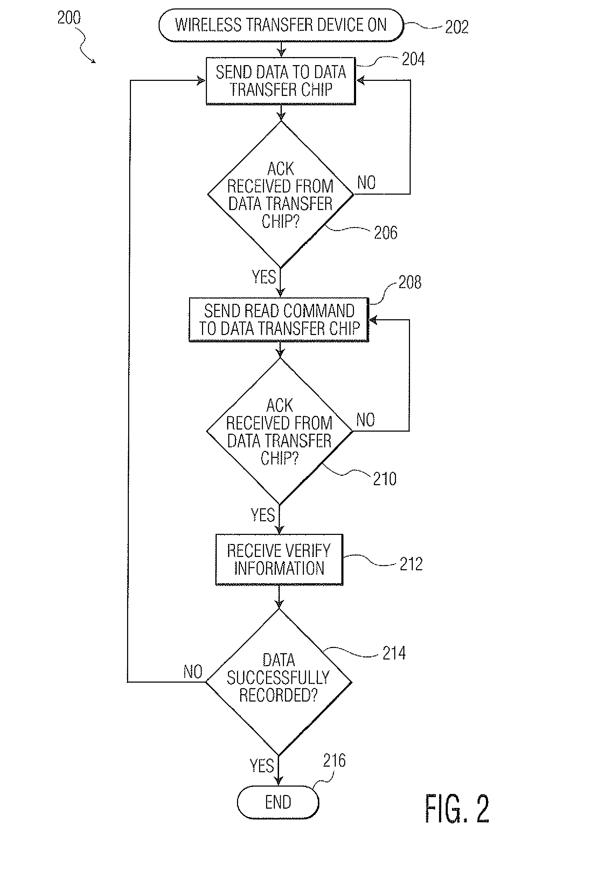

An embodiment of a wireless data transfer device operation 200 is illustrated in Fig. 2. The wireless data transfer device 102 may be powered on in block 202. A set of data may be transmitted to the data transfer chip 106 in block 204. The set of data may be divided into subsets of data. The set of data may be transmitted using a standard compliant write command, such as, for example, a RFID write command. As shown in block 206, the wireless data transfer device operation 200 may return to block 204 until an acknowledge signal (ACK) is received from the data transfer chip 106. If an ACK is not received in block 206, then the wireless data transfer device operation 200 may transmit another subset of the set of data or retransmit the previously transmitted set of data. After receiving an ACK signal, a read command may be sent to the data transfer chip 106 in block 208. As shown in block 210, the wireless data transfer device operation 200 may return to block 208 until an ACK signal is received from the data transfer chip 106. If no ACK is received in block 210, then the wireless data transfer device operation 200 may repeat the read command in block 208. If an ACK is received in block 210, the data transfer chip 106 may be ready to transmit the set of data to the wireless data transfer device 102. In block 212, verify information may be received by the wireless data transfer device 102. The verify information may identify whether the set of data was successfully stored in the storage memory 122 of the microcontroller 108. As shown in block 214, if the set of data was successfully stored, the wireless data transfer device operation 200 may end. If the set of data was not successfully stored, the wireless data transfer device operation 200 may return to block 204.

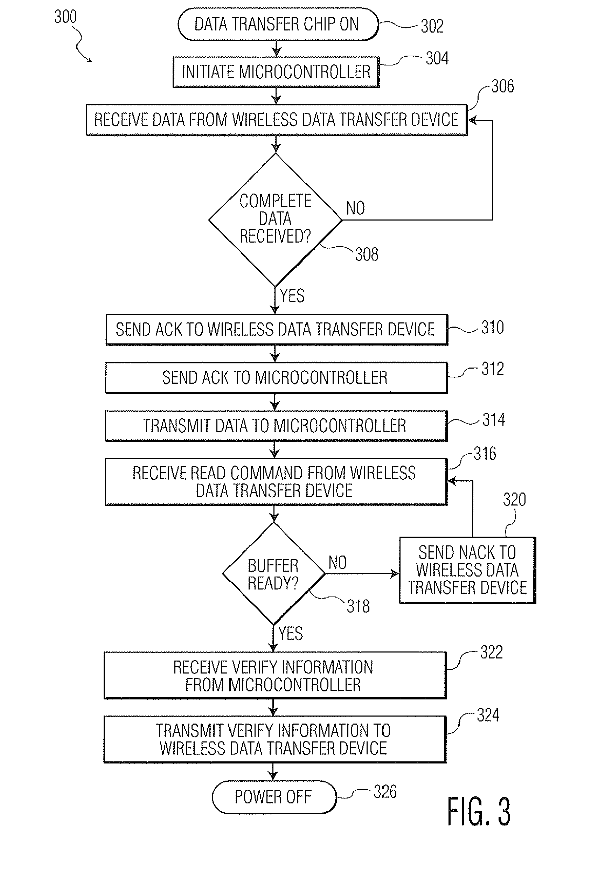

Fig. 3 illustrates an embodiment of a data transfer chip operation 300. The data transfer chip 106 may be powered on in block 302. The data transfer chip 106 may be powered via wireless energy transfer from the wireless data transfer device 102, via the I/O port 118 of the microcontroller 108, and/or via other external or internal sources. Once powered on, the data transfer chip 106 may initiate operation of the microcontroller 108 in block 304. The data transfer chip 106 may initiate operation of the microcontroller 108 by setting a high voltage on the power node 116, by transmitting a signal over the microcontroller interface 114, and/or by triggering other interrupts of the microcontroller 108. In block 306, the data transfer chip 106 may receive the set of data from the wireless data transfer device 102. The set of data may be temporarily stored in the buffer 112 of the data transfer chip 106. As shown in block 308, the data transfer chip operation 300 may return to block 306 until a complete set of data is received. If a complete set of data is not received in block 308, then the data transfer chip operation 300 may return to block 306 to receive an additional subset of the set of data, or to receive a previously transmitted set of data. Once a complete set of data is received, the data transfer chip 106 may transmit an ACK signal to the wireless data transfer device 102 in block 310. The data transfer chip 106 may also send an ACK signal to the microcontroller 108 to indicate a complete set of data is stored in the buffer 112. The ACK signal to the microcontroller 108 may be followed by transmitting the set of data stored in the buffer 112 to the microcontroller 108 in block 314. As shown in block 316, the data transfer chip 106 may receive a read command from the wireless data transfer device 102. As shown in blocks 318 and 320, the data transfer chip 106 may respond to the read command with a negative acknowledge (NACK) signal until the buffer 112 is ready. The buffer 112 may be ready when a complete set of data has been transmitted to the microcontroller 108. When the buffer 112 is ready, the data transfer chip 106 may receive the verify information from the microcontroller 108 in block 322. The data transfer chip 106 then may transmit the verify information to the wireless data transfer device 102 in block 324. The data transfer chip 106 powers down and the data transfer chip operation 300 may end in block 326.

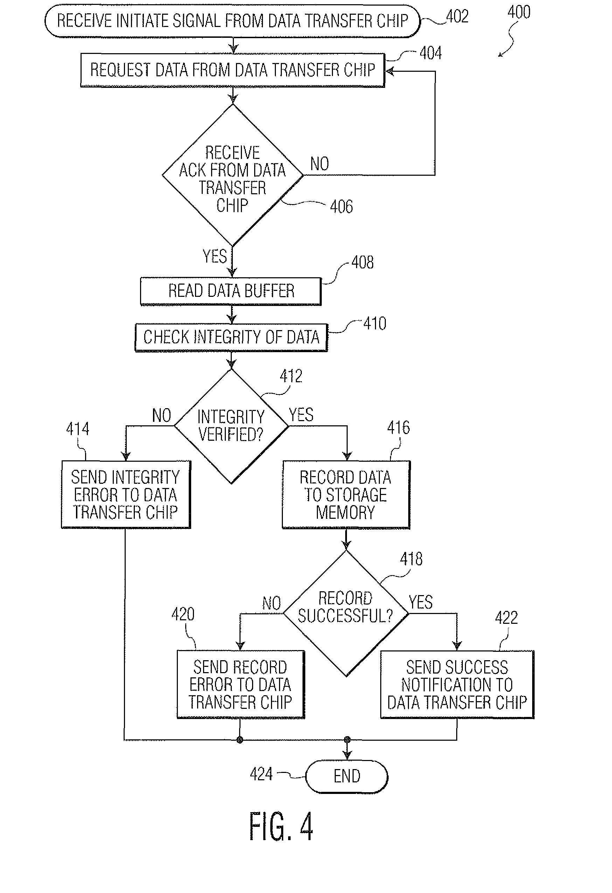

An embodiment of a microcontroller operation 400 is shown in Fig. 4. The microcontroller operation 400 may begin when the microcontroller 108 receives an initiate signal from the data transfer chip 106 in block 402. The microcontroller 108 may be initiated by sensing a high voltage on the power node 116 of the data transfer chip 106, by receiving a signal via chip interface 120, and/or by a trigger to one or more other interrupts of the microcontroller 108. In block 404, the microcontroller 108 may begin requesting the set of data from the data transfer chip 106. As shown in block 406, the microcontroller operation 400 may return to block 404 until an ACK signal is received from the data transfer chip 106. If an ACK signal is not received in block 406, then the microcontroller operation 400 repeats the request for the set of data in block 404. If an ACK signal is received, then the microcontroller 108 may then read the set of data from the buffer 112 of the data transfer chip 106 in block 408. After reading the set of data, the microcontroller 108 may verify the integrity of the set of data in block 410. The integrity of the set of data may be verified using a variety of methods including, for example, parity bits, hashing, and/or cryptographic keys. As shown in block 412, the microcontroller operation 400 may determine whether the integrity of the set of data is compromised. If the integrity of the set of data is compromised, the microcontroller operation 400 may transmit an error as the verify information to the data transfer chip 106 in block 414, and the microcontroller operation 400 may end in block 424. If the integrity of the set of data is not compromised, then the microcontroller 108 may proceed to record the set of data to the storage memory 122 in block 416. As shown in block 418, the microcontroller operation 400 may determine whether the set of data was recorded in the storage memory 122 properly. If the set of data was not recorded properly, the microcontroller operation 400 may transmit an error as the verify information to the data transfer chip 106 in block 420, and the microcontroller operation 400 may end in block 424. If the set of data was recorded properly, then the microcontroller operation 400 may transmit a success notification as the verify information to the data transfer chip 106 in block 422, and the microcontroller operation 400 may end in block 424.

The operations and blocks shown in FIGS. 2, 3, and 4 may occur substantially in parallel and/or substantially in series.

The storage memory 122 of the microcontroller 108 may be initially loaded with at least a bootloader program to enable the microcontroller operation 400. Additional operations of the microcontroller 108 for use with the CEP 100 may not initially be stored in the storage memory 122. The data transferred from the wireless data transfer device 102, when stored in the storage memory 122 of the microcontroller 108, may provide additional functionality for the CEP 100. Multiple sets of data may be transferred to the storage memory 122 via the data transfer chip 106. Each set of data may be temporarily stored in the buffer 112 of the data transfer chip 106. Once a set of data is successfully transmitted to the storage memory 122 of the microcontroller 108, a new set of data may be received into the buffer 112 of the data transfer chip 106. The set and/or sets data may be in the form of a firmware, operating system, program and/or data structure that enables at least one aspect of the CEP 100. In the case where the firmware, operating system, program and/or data structure is comprised of multiple sets of data, the firmware, operating system, program and/or data structure may be operational after all necessary sets of data are transferred to the storage memory 122 of the microcontroller 108 via the data transfer chip 106.

The amount of data transferred to the storage memory 122 may be decreased by customizing the data for a specific language or region. For example, the data for a CEP 100 that is to be used in the United States may have languages other than English omitted from the data. By storing data for fewer languages or regions in the storage memory 122, the size of the storage memory 122 of the CEP 100 may also be decreased. In addition or alternatively, the data may be customized for specific models of a consumer electronic product, for the needs of a specific customer, to update a previously stored data, and/or for other various purposes. The data may be transferred to the CEP 100 at the time of manufacture, or later by a regional sales representative, importer, reseller, end user, and/or any entity seeking to store data in the storage memory 122. Wirelessly transferring data to the CEP 100 may allow for flexibility in where and when customizations to the CEP 100 are performed. Wirelessly transferring data to the CEP 100 may also allow for easy and flexible updating or reconfiguration of the CEP 100. For example, an end user may take the CEP 100 to a sales representative, importer, reseller, and/or other entity to have the CEP 100 updated or reconfigured.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the spirit and scope of the invention. Accordingly, the foregoing disclosure, description, and figures are for illustrative purposes only and do not in any way limit the invention, which is defined only by the claims.

## Claims

1. A system comprising:
- a chip having a wireless interface, a buffer, and a wired interface, wherein the chip is one of a radio frequency identification chip and a near-field communication chip; and
- a microcontroller connected to the wired interface;
wherein the chip receives customization data via the wireless interface, temporarily stores the customization data in the buffer, and transmits the customization data to the microcontroller via the wired interface.

2. The system of claim 1, wherein the customization data comprises a program for a consumer electronic product.

3. The system of claim 2, wherein the program is customized for at least one of a geographic region and a model of consumer electronic product.

4. The system of claim 2, wherein the program enables at least one language on the consumer electronic product.

5. The system of claim 1, wherein the customization data comprises a data structure for a consumer electronic product.

6. The system of claim 1, wherein the chip is both a radio frequency identification chip and a near-field communication chip.

7. An apparatus comprising:
- a wireless interface for receiving customization data, wherein the wireless interface is one of a radio frequency identification interface and a near-field communication interface;
- a buffer; and
- a wired interface connected to a microcontroller;
wherein the customization data received via the wireless interface is temporarily stored in the buffer and transmitted via the wired interface to the microcontroller.

8. The apparatus of claim 7, wherein the customization data comprises a program for a consumer electronic product.

9. The apparatus of claim 8, wherein the program is customized for at least one of a geographic region and a model of consumer electronic product.

10. The apparatus of claim 8, wherein the program enables at least one language on the consumer electronic product.

11. The apparatus of claim 7, wherein the customization data comprises a data structure for a consumer electronic product.

12. The apparatus of claim 7, wherein the wireless interface comprises a radio frequency identification interface and a near-field communication interface.
